Europäisches Patentamt

European Patent Office

Office européen des brevets

(19)

(11) Publication number: **0 017 223**

A1

(12) **EUROPEAN PATENT APPLICATION**

(21) Application number: 80101764.1

(22) Date of filing: 02.04.80

(51) Int. Cl.³: **B 60 C 7/28**

(30) Priority: 09.04.79 US 27972

(43) Date of publication of application:
15.10.80 Bulletin 80/21

(84) Designated Contracting States:
AT BE DE FR GB IT LU NL SE

(71) Applicant: THE FIRESTONE TIRE & RUBBER COMPANY
1200 Firestone Parkway
Akron, Ohio 44317(US)

(72) Inventor: Beneze, Heinz Wilhelm
1410 Westvale Avenue
Akron Ohio 44313(US)

(74) Representative: von Raffay, Vincenz, Dipl.-Ing. et al,
Patentanwälte Dipl.-Ing. Vincenz v. Raffay Dipl.-Chem.
Dr. Hans D. Boeters Postfach 32 32 17
D-2000 Hamburg 13(DE)

(54) **Non-pneumatic bicycle tire.**

(57) A non-pneumatic bicycle tire of rubber, elastomeric, or plastic type material, said tire having a uniform and circumferentially disposed internal cavity terminating with annular bead portions having outer annular bead cavities to engage the internal portion of bicycle wheel rim edges, the improvement wherein said tire is extruded and has annular retainer means (14) positioned in a circumferential and centrally located tread slot (16) having a depth greater than that of said tread, said retainer means being the sole means to secure said tire to said wheel rim.

EP 0 017 223 A1

Croydon Printing Company Ltd.

- 1 -

## NON-PNEUMATIC BICYCLE TIRE

RELATED PATENTS

U.S. Patent 1,169,984 is directed to a non-pneumatic elastic wheel tire for bicycles and automobiles. The tire is made of rubber or a rubber-like material and has an internal hollow space between the tire and the wheel rim on which it is placed; this space may be air filled or filled with, for example, a compressible elastic material.

U.S. Patent 956,928·discloses a pneumatic tire with a ring member positioned in the outer central groove of a tread band, the latter being held to the intermediate tire portion ("cover") by compression; this tread band is interchangeable.

U.S. Patent 4,127,166 is directed to a molded non-pneumatic bicycle tire made from a urethane elastomer; this tire is one requiring the use of a bonding cement for bonding the tire to the wheel rim.

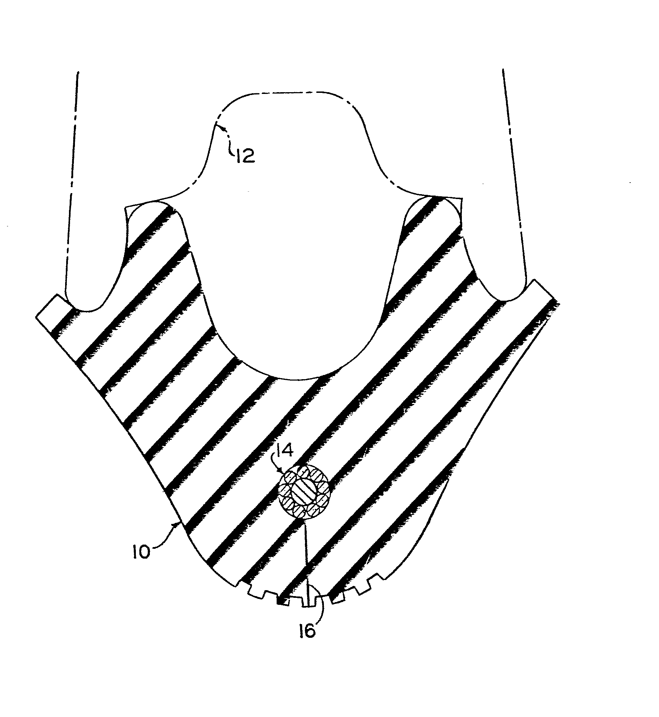

U.S. Patent 1,434,742 discloses solid tire retaining means for wheels; said tire is one which has a central wire core member (15) as shown in Fig. 3; it is identified in Column 2 as the "usual wire 15 which extends entirely around the tire."

- 2 -

U.S. Patent 3,126,040, is directed to a pneumatic tire with anti-skid elements anchored to the center tread portion by means of a pair of inextensible tread rings.

U.S. Patent 2,996,040 is directed to a high speed pneumatic tire wherein undesirable movement of portions of the tire tread, sidewall and body is prevented by a constricting annular member extending, in a slot therefore, circumferentially about the center portion of the tire tread. An effective constricting member is disclosed to be one from plies produced by winding continuous twisted wire cord into generally parallel convolutions and surrounding the wire with a rubbery substance, followed by vulcanization to unit the wires, the rubbery substance and the tire into a unit.

## BACKGROUND OF THE INVENTION

Heretofore, pneumatic bicycle tires have been made of several components, fabric plies, tread, sidewalls and rim beads. The components are assembled manually on a special tire building machine and subsequently vulcanized in a curing press. The completed tire is mounted on a bicycle wheel rim and inflated by an inner tube that secures the tire on the rim. A malfunction of any one component causes tire failure. This known tire construction method is relatively expensive, particularly in terms of labor and equipment; in addition, tire and/or tube repair requires a skilled pair of hands. Adequate pressure must be maintained in the tire.

## DESCRIPTION OF THE INVENTION

Any appropriate, rubber, elastomer, plastic or blend thereof capable of being extruded through a conventional extruder and die can be utilized to produce my uniquely designed bicycle tire which is non-pneumatic.

My tire can be cut to measurement from a roll thereof and its design eliminates the need for adhesive bonding and/or splicing of the ends. Furthermore, adhesive bonding to the wheel rim is not needed as I achieve a friction fit there, and where the cut ends meet.

The tread slot of controlled depth is the key feature of my unique tire design; into this slot, which is at a depth below that of the tread, is inserted an annular retainer means which can be, for example, synthetic fiber or steel wire which can be present in the tire often cutting to the required length and then snapped onto the wheel rim. As an alternative, the tire can be positioned onto the wheel rim and the annular retainer means then positioned therein. Should the tire grow during extended use it can readily be cut back to its original length and then be repositioned on the rim with, for example, a butt splice. The tire cavity can be filled with known foams or elastomeric materials. The use of an adhesive to bond the butt splice and/or tire to the wheel rim is not necessary; my improved tire results in a friction fit once the annular retaining means is combined with said tire and wheel rim.

DESCRIPTION OF THE DRAWING

In the drawing, 10 is the tire, 12 is the wheel rim on which the tire 10 is placed; 14 is the annular retainer means which is positioned in slot 16 to maintain said tire in appropriate contact with said wheel rim.

DETAILED DESCRIPTION OF THE INVENTION

An extrudable rubber, plastic, elastomer or blends of each are extruded through a conventional extruder, for example, one with a screw of 150 mm (6") diameter equipped with a die of predetermined dimensions

- 4 -

to result in a tire cross-section as herein described and claimed. An indefinite length of tire body material is extruded in a continuous operation; the tire body can then be wound onto a drum and then cured in an autoclave under steam pressure and an appropriate temperature to cure the tire body uniformly.

The annular retainer can be made of any known material capable of carrying tension. It can, for example, be made from steel wire or synthetic fiber such as Nylon 6, aramid, polyester, etc. This retainer can be prepositioned in the central tread slot prior to snapping the tire onto the wheel rim or it can be positioned after the tire is fitted onto the wheel rim. The need for splicing or adhesive bonding is eliminated.

Extrudable rubber like materials which can be utilized to produce my improved non-pneumatic bicycle tire include, for example, any one or blends of one or more of the extrudable plastic materials set forth on pages 751 to 757 of the publication:

The International Plastics Selector 1977 Extruding and Molding Grades by Cordura Publication, Inc.

(desk-top data bank)

Specific extrudable plastic materials which can be utilized are, for example, polystyrene, nylon, polyethylene, polypropylene and polyvinylchloride (PVC).

Extrudable (non-plastic) elastomeric materials which can be utilized to prepare my improved tire include extrudable elastomeric materials acrylic rubber, butadiene rubber, natural rubber, brominated isobutylene-isoprene, chlorinated isobutylene-isoprene, butyl rubber, butadiene/ styrene/vinyl pyridine, chlorinated polyethylene, chloroprene, chlorosulfonated polyethylene, epichlorohydrin rubber, ethylene-propylene-diene, fluorocarbon rubbers, halogenated rubbers, butadiene acrylonitirle copolymers, polyisoprene, polysulfide rubber, silicone rubber, styrene-butadiene and urethane rubbers.

The following example is representative and illustrates the formation of my unique bicycle tire design and its adaptation to a bicycle tire wheel.

0017223

- 6 -

EXAMPLE

A natural rubber based conventional off-the-road tread stock containing ISAF carbon black and sulfur, was extruded through a conventional extruder and die to give the tire cross-section herein described and set forth in the drawing. The extruder had a screw of 150 mm (6") diameter and was equipped with a die of the proper dimensions. The extruded tire was wound onto a drum and moved into an autoclave for curing. A steam pressure of approximately 3 atu (50 psi) and a temperature of 140°C was maintained in the autoclave for minutes and resulted in a uniformally vulcanized tire body.

The tire body was then cut to length and placed onto a bicycle wheel. Rope was utilized as the annular retainer; this rope was the only means utilized to secure said tire to said wheel rim. The ends of the tire body were simply butt spliced.

The preceding example can be varied within the context of my total specification disclosure. Known equivalent tire tread stock compositions and annular retaining means can be substituted therein to achieve essentially the same results. The particular combination selected is not critical.

It is understood that one skilled in the art can readily compound, with a minimum of routine experimentation and/or optimization, a wide variety of extrudable rubber, plastic or elastomer compositions which can be utilized in the practice of my invention. The particular extrudable elastomeric or plastic material and/or composition containing said material selected is not critical; my improvement feature, however, is.

WHAT IS CLAIMED:

1. In a non-pneumatic bicycle tire, said tire having a uniform and circumferentially disposed internal cavity terminating with annular bead portions having outer annular bead cavities to engage the internal portion of bicycle wheel rim edges, the improvement wherein said tire is extruded and has annular retainer means positioned in a circumferential and centrally located tire tread slot having a depth greater than that of said tread, said retainer means being the sole means to secure said tire to said wheel rim.

2. The improved bicycle tire of claim 1 wherein said annular retainer means is positioned in said tread slot prior to placing said tire on said wheel.

3. The improved bicycle tire of claim 1 wherein said annular retainer means is positioned in said tread slot after said tire is positioned on said wheel.

4. The improved bicycle tire of claim 1 wherein said annular retainer means is steel wire.

5. The improved bicycle tire of claim 1 wherein said annular retainer means is a synthetic fiber.

6. The improved bicycle tire of claim 1 is a rubber or elastomeric tension carrying band.

7. The improved bicycle tire of claim 1 wherein said annular retainer means is rope.

0017223

| | European Patent Office | **EUROPEAN SEARCH REPORT** | Application number |
|---|---|---|---|
| | | | EP 80 10 1764 |

| **DOCUMENTS CONSIDERED TO BE RELEVANT** | | | CLASSIFICATION OF THE APPLICATION (Int. Cl. ³) |
|---|---|---|---|
| Category | Citation of document with indication, where appropriate, of relevant passages | Relevant to claim | |
| | GB – A – 989 182 (DUNLOP) <br> * Page 1, line 31 – page 2, line 52 * | 1,2,4 | B 60 C 7/28 |
| A | CH – A – 237 713 (SCHWEIZERISCHE DRAHT–GUMMIWERKE ALTDORF–URI) | | |
| A | GB – A – 1 148 506 (DUNLOP) | | |
| A | DE – C – 177 789 (M. FISCHER) | | |
| A | US – A – 3 948 303 (E. PATRICK) | | |

TECHNICAL FIELDS SEARCHED (Int.Cl. ³)

B 60 C 7/28
7/24

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| THE HAGUE | 10–07–80 | SCHMITT |

EPO Form 1503.1 06.78